# EUROPEAN PATENT APPLICATION

(11) **EP 4 037 068 A1**
(43) Date of publication of application: **03.08.2022**
(21) Application number: 20880480.7
(22) Date of filing: 20.10.2020
(51) Int. Cl.: H01M 10/654, H01M 10/643, H01M 10/613, H01M 10/04, H01M 10/0587

(54) **ELECTRODE ASSEMBLY AND SECONDARY BATTERY COMPRISING SAME**

(30) Priority: 28.10.2019 KR 20190134952
(71) Applicant: LG Energy Solution, Ltd., Seoul 07335 (KR)
(72) Inventor: KIM, Jee Eun, Daejeon 34122 (KR); SON, Jong In, Daejeon 34122 (KR)
(74) Representative: Plasseraud IP
(86) International application number: PCT/KR2020/014339
(87) International publication number: WO 2021/085917

(57) **Abstract**

The present invention relates to an electrode assembly and a secondary battery comprising the same. The electrode assembly according to the present invention is provided as an electrode assembly, in which a positive electrode, a separator, and a negative electrode are alternately stacked to be wound, wherein the positive electrode comprises a positive electrode active material portion that is an area, on which a positive electrode active material is stacked on a positive electrode collector, and a positive electrode non-coating portion that is an area, on which the positive electrode active material is not stacked, the positive electrode non-coating portion comprises a first positive electrode non-coating portion disposed at a winding central portion, and the electrode assembly further comprises a heat-dissipating tape disposed on the first positive electrode non-coating portion and comprising a heat-dissipating material.

## Description

### CROSS-REFERENCE TO RELATED APPLICATION

The present application claims the benefit of the priority of Korean Patent Application No. 10-2019-0134952, filed on October 28, 2019, which is hereby incorporated by reference in its entirety.

### TECHNICAL FIELD

The present invention relates to an electrode assembly and a secondary battery comprising the same.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Among them, the jelly-roll type electrode assembly is widely used because the jelly-roll type electrode assembly has an advantage is easily manufactured and has high energy density per weight.

However, the jelly-roll type electrode assembly has a problem in that a cell is deteriorated due to heat generated in a winding central portion. Here, the jelly-roll type electrode assembly has a problem in that the separator disposed at the winding central portion is contracted by the high-temperature heat generated at the winding central portion to cause a short circuit on an interface between the positive electrode and the negative electrode, thereby causing ignition.

Particularly, in the case of the high-power cell, heat is generated above 80°C by only discharge. In addition, it is confirmed that the ignition occurs when the electrode assembly is accommodated in a hot box and maintained at 130°C for 60 minutes through an experiment.

[Prior Art Document] (Patent Document) Korean Patent Publication No. 10-2016-0010121

### DISCLOSURE OF THE INVENTION

### TECHNICAL PROBLEM

One aspect of the present invention is to provide an electrode assembly, which is capable of dissipating heat generated from a winding central portion of the electrode assembly, and a secondary battery comprising the same.

Another aspect of the present invention is to provide an electrode assembly, which is capable of suppressing contraction of a separator disposed at a winding central portion in the electrode assembly, and a secondary battery comprising the same.

### TECHNICAL SOLUTION

An electrode assembly according to an embodiment of the present invention may be provided as an electrode assembly, in which a positive electrode, a separator, and a negative electrode are alternately stacked to be wound, wherein the positive electrode comprises a positive electrode active material portion that is an area, on which a positive electrode active material is stacked on a positive electrode collector, and a positive electrode non-coating portion that is an area, on which the positive electrode active material is not stacked, the positive electrode non-coating portion comprises a first positive electrode non-coating portion disposed at a winding central portion, and the electrode assembly further comprises a heat-dissipating tape disposed on the first positive electrode non-coating portion and comprising a heat-dissipating material.

A secondary battery according to an embodiment of the present invention may comprise the electrode assembly according to an embodiment of the present invention.

### ADVANTAGEOUS EFFECTS

According to the present invention, a heat-dissipating tape comprising a heat-dissipating material may be provided at the winding central portion of the electrode assembly to dissipate the heat generated in the winding central portion, thereby preventing the risk of ignition of the secondary battery from occurring, ensuring the stability, and preventing the secondary battery from being deteriorated.

In addition, according to the present invention, the contraction of the separator may be suppressed by attaching the heat-dissipating tape to the winding central portion of the electrode assembly, and thus, the risk of ignition due to the exposure of the electrode may be significantly reduced or prevented.

### BRIEF DESCRIPTION OF THE DRAWINGS

FIG. 1 is a perspective view of an electrode assembly and a secondary battery comprising the same according to an embodiment of the present invention.
FIG. 2 is a plan view illustrating a main part in an unfolded state before the electrode assembly is wound according to an embodiment of the present invention.
FIG. 3 is a front view illustrating the unfolded state before the electrode assembly is wound according to an embodiment of the present invention.
FIG. 4 is a front view illustrating an unfolded state before an electrode assembly is wound according to another embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Electrode assembly according to an embodiment

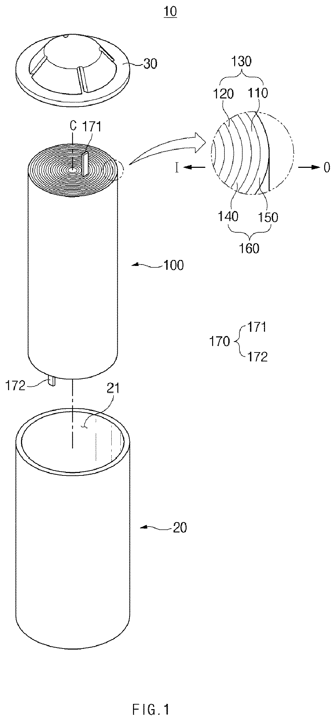

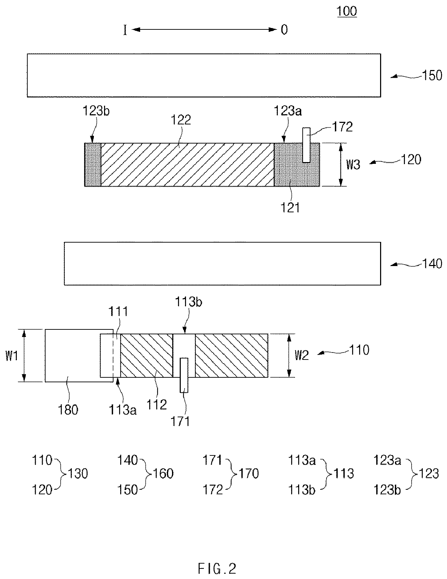

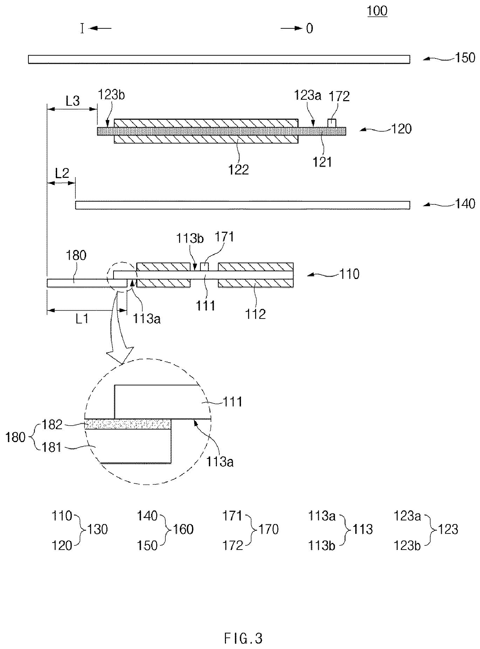

FIG. 1 is a perspective view of an electrode assembly and a secondary battery comprising the same according to an embodiment of the present invention, FIG. 2 is a plan view illustrating a main part in an unfolded state before the electrode assembly is wound according to an embodiment of the present invention, and FIG. 3 is a front view illustrating the unfolded state before the electrode assembly is wound according to an embodiment of the present invention.

Referring to FIGS. 1 to 3, an electrode assembly 100 according to an embodiment of the present invention is provided as an electrode assembly 100 in which a positive electrode 110, a separator 160, and a negative electrode 120 are alternately stacked to be wound and comprises a heat-dissipating tape 180 comprising a heat-dissipating material.

Hereinafter, the electrode assembly according to an embodiment of the present invention will be described in more detail with reference to FIGS. 1 to 3.

Referring to FIGS. 1 and 3, the electrode assembly 100 may be a chargeable and dischargeable power generation element and have a structure in which the electrodes 130 and the separator 160 are combined to be alternately stacked with each other. Here, the electrode assembly 100 may be formed in a shape in which the electrodes 130 and the separator 160 are alternately combined to be wound. Here, an electrode stack may be wound in a cylindrical shape wound around a central axis C.

The electrode 130 may comprise the positive electrode 110 and the negative electrode 120. Also, the separator 160 separates and electrically insulates the positive electrode 110 and the negative electrode 120 from each other.

The positive electrode 110 may comprise a positive electrode collector 111, a positive electrode active material portion 112 that is an area on which a positive electrode active material is stacked on the positive electrode collector 111, and a positive electrode non-coating portion 113 that is an area on which the positive electrode active material is not stacked.

The positive electrode collector 111 may be provided as, for example, foil made of an aluminum material.

The positive electrode active material may comprise lithium manganese oxide, lithium cobalt oxide, lithium nickel oxide, lithium iron phosphate, or a compound or mixture containing at least one of the above-described materials.

The positive electrode non-coating portion 113 may comprise a first positive electrode non-coating portion 113a disposed at a winding central portion I and a second positive electrode non-coating portion 113b disposed at a central portion.

The first positive electrode non-coating portion 113a may be, for example, both surfaces (top and bottom surfaces) of one end of the positive electrode 110 toward the winding central portion.

The first positive electrode non-coating portion 113a may be formed on the top surface of the positive electrode 110 when referring to FIG. 3 as another example. That is, the first positive electrode non-coating portion 113a may be disposed on a surface of the positive electrode 110, which faces a first separator 140.

The first positive electrode non-coating portion 113a may be formed on the bottom surface of the positive electrode 110 when referring to FIG. 3 as another example. That is, the first positive electrode non-coating portion 113a may be disposed on a surface that is opposite to the surface of the positive electrode 110, which faces the first separator 140.

The second positive electrode non-coating portion 113b may be disposed at a central portion disposed between a winding central portion I and a winding outer portion O in the positive electrode 110.

The negative electrode 120 may comprise a negative electrode collector 121, a negative electrode active material portion 122 that is an area on which a negative electrode active material is stacked and a negative electrode non-coating portion 123 that is an area on which the negative electrode active material is not stacked.

For example, the negative electrode collector 121 may be foil made of a copper (Cu) or nickel (Ni) material.

The negative electrode active material may comprise synthetic graphite, lithium a metal, a lithium alloy, carbon, petroleum coke, activated carbon, graphite, a silicon compound, a tin compound, a titanium compound, or an alloy thereof. Here, the negative electrode active material may further comprise, for example, non-graphite-based SiO (silica) or SiC (silicon carbide).

The negative electrode non-coating portion 123 comprises a first negative electrode non-coating portion 123a disposed at a winding outer portion O in the negative electrode 120 and a second negative electrode non-coating portion 123b disposed at a winding central portion I in the negative electrode 120.

The separator 160 may be made of an insulating material to insulate the positive electrode 110 and the negative electrode 120 from each other.

Also, the separator 160 may be, for example, a multilayered film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

Also, the separator 160 may comprise a first separator 140 and a second separator 150.

Here, the positive electrode 110, the first separator 140, the negative electrode 120, and the second separator 150 may be sequentially stacked in the electrode assembly 100.

An electrode tab 170 is attached to the electrode 130 and is electrically connected to the electrode 130.

The electrode tab 170 may comprise a positive electrode tab 171 attached to the positive electrode 110 and a negative electrode tab 172 attached to the negative electrode 120.

The positive electrode tab 171 may be disposed at the central portion disposed between the winding central portion I and the winding outer portion O in the positive electrode 110, and the negative electrode tab 172 may be disposed at the winding outer portion O in the negative electrode 120.

Particularly, the positive electrode tab 171 may be disposed on the second positive electrode non-coating portion 113b, and the negative electrode tab 172 may be disposed on the first negative electrode non-coating portion 123a.

Also, the electrode tab may not be attached (provided) to the first positive non-coating portion 113a and the second negative non-coating portion 123b.

The positive electrode tab 171 may be formed in an upward direction in which a cap 30 is disposed in FIG. 1, and the negative electrode tab 172 may be disposed in a downward direction, i.e., toward a bottom surface of an accommodation part 21 of a battery case 20.

The heat-dissipating tape 180 may comprise a heat-dissipating material and may be disposed on the first positive electrode non-coating portion 113a. Here, the heat-dissipating tape 180 may be disposed at the winding central portion I of the wound electrode assembly 100. At this time, the heat-dissipating tape 180 may dissipate heat generated in the winding central portion I of the electrode assembly 100.

Also, the heat-dissipating tape 180 may be attached to the first positive electrode non-coating portion 113a. Particularly, the heat-dissipating tape 180 may be disposed on a surface that is opposite to a surface of the first positive electrode non-coating portion 113a, which faces the first separator 140. That is, the heat-dissipating tape 180 may be attached to a bottom surface of the first positive electrode non-coating portion 113a (see FIG. 3 ).

Also, the heat-dissipating tape 180 may have a width W1 greater than each of a width W2 of the positive electrode 110 and a width W3 of the negative electrode 120.

Furthermore, the heat-dissipating tape 180 may be attached over the first positive electrode non-coating portion 113a, the first separator 140, and the second separator 150.

Also, the heat-dissipating tape 180 comprises a base 181 and an adhesive layer 282 stacked on the base 181, and the base 181 may comprise a graphite-based material.

Also, in the heat-dissipating tape 180, the adhesive layer 282 may be formed on one surface of the base 181 so that the heat-dissipating tape 180 is attached over an edge of the first positive electrode non-coating portion 113a, the first separator 140, and the second separator 150 through the adhesive layer 282.

Thus, contraction of the first separator 140 and the second separator 150, which adhere to the heat-dissipating tape 180, may be suppressed through the heat-dissipating tape 180. Thus, it is possible to prevent a short circuit between the positive electrode 110 and the negative electrode 120, which are in contact with each other, due to the contraction of the separator 160 from occurring. Thus, it is possible to prevent a cell from being ignited.

The negative electrode 120 may be formed to be longer the positive electrode 110. Thus, the positive electrode 110 facing the negative electrode 120 may be longer to prevent lithium from being precipitated.

Also, each of the first separator 140 and the second separator 150 may be formed to be longer than a length of each of the positive electrode 110 and the negative electrode 120 to insulate the positive electrode 110 and the negative electrode 120 from each other.

Furthermore, the second separator 150 may be formed to be longer than the first separator 140. Thus, the heat-dissipating tape 180 may be attached over the first positive electrode non-coating portion 113a, the first separator 140, and the second separator 150 to easily suppress the contraction of the first separator 140 and the second separator 150.

Also referring to FIG. 3, in an unfolded state before the electrode assembly 100 is wound, the heat-dissipating tape 180 may be formed to have a length L1 so as to be attached over an end of the first positive electrode non-coating portion 113a, an end of the first separator 140, and the second separator 150. Here, each of one end of the first separator 140 and one end of the negative electrode 120 may be spaced apart from one end of the heat-dissipating tape 180 in a horizontal direction. Here, a distance L2 between one end of the heat-dissipating tape 180 and one end of the first separator 140 in the horizontal direction may be less than a distance L3 between one end of the heat-dissipating tape 180 and one end of the negative electrode 120 in the horizontal direction. Also, the heat-dissipating tape 180 may be formed not to be longer than the length of the second separator 150 so as not to be deviated from one end of the second separator 150.

### Electrode assembly according to another embodiment

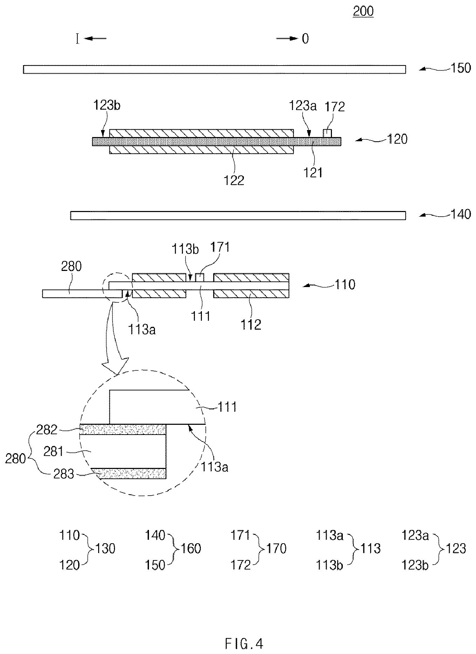

FIG. 4 is a front view illustrating an unfolded state before an electrode assembly is wound according to another embodiment of the present invention.

Hereinafter, an electrode assembly 200 according to another embodiment will be described with reference to FIG. 4.

Referring to FIG. 4, an electrode assembly 200 according to another embodiment of the present invention is provided as an electrode assembly 200 in which a positive electrode 110, a separator 160, and a negative electrode 120 are alternately stacked to be wound and comprises a heat-dissipating tape 280 comprising a heat-dissipating material.

The electrode assembly 200 according to another embodiment of the present invention is different from the electrode assembly according to the foregoing embodiment in that an adhesive layer 283 is further formed on the other surface of the base 281 in a heat-dissipating tape 280. Thus, contents of this embodiment, which are duplicated with those according to the forgoing embodiment, will be omitted or briefly described, and also, differences therebetween will be mainly described.

Referring to FIG. 4, the positive electrode 110 may comprise a positive electrode collector 111, a positive electrode active material portion 112 that is an area, on which a positive electrode active material is stacked on the positive electrode collector 111, and a positive electrode non-coating portion 113 that is an area on which the positive electrode active material is not stacked.

The positive electrode non-coating portion 113 may comprise a first positive electrode non-coating portion 113a disposed at a winding central portion I and a second positive electrode non-coating portion 113b disposed at a central portion.

The second positive electrode non-coating portion 113b may be disposed at a central portion disposed between a winding central portion I and a winding outer portion O in the positive electrode 110.

The negative electrode 120 may comprise a negative electrode collector 121, a negative electrode active material portion 122 that is an area , on which a negative electrode active material is stacked on the negative electrode collector 121, and a negative electrode non-coating portion 123 that is an area on which the negative electrode active material is not stacked.

The negative electrode non-coating portion 123 may comprise a first negative electrode non-coating portion 123a disposed at a winding outer portion O in the negative electrode 120 and a second negative electrode non-coating portion 123b disposed at a winding central portion I in the negative electrode 120.

The separator 160 may be made of an insulating material to insulate the positive electrode 110 and the negative electrode 120 from each other.

Also, the separator 160 may comprise a first separator 140 and a second separator 150.

Here, the positive electrode 110, the first separator 140, the negative electrode 120, and the second separator 150 may be sequentially stacked in the electrode assembly 200.

Here, the negative electrode 120 may be formed to be longer than the positive electrode 110, each of the first separator 140 and the second separator 150 may be formed to be longer than each of the positive electrode 110 and the negative electrode 120, and the second separator 150 may be formed to be longer than the first separator 140.

An electrode tab 170 is attached to the electrode 130 and is electrically connected to the electrode 130.

The electrode tab 170 may comprise a positive electrode tab 171 attached to the positive electrode 110 and a negative electrode tab 172 attached to the negative electrode 120.

For example, the positive electrode tab 171 may be disposed on the second positive electrode non-coating portion 113b, and the negative electrode tab 172 may be disposed on the first negative electrode non-coating portion 123a.

The heat-dissipating tape 280 may comprise a heat-dissipating material and may be disposed on the first positive electrode non-coating portion 113a. Here, the heat-dissipating tape 280 may be disposed at the winding central portion I of the wound electrode assembly 200. At this time, the heat-dissipating tape 280 may dissipate heat generated in the winding central portion I of the electrode assembly 200.

Also, the heat-dissipating tape 280 may be formed to have a width greater than that of each of the positive electrode 110 and the negative electrode 120.

Furthermore, the heat-dissipating tape 280 may be attached over the first positive electrode non-coating portion 113a, the first separator 140, and the second separator 150.

The heat-dissipating tape 280 may comprise a base 281 and adhesive layers 282 and 283 stacked on the base 281, and the base 281 may comprise a graphite-based material.

Also, in the heat-dissipating tape 280, the adhesive layers 282 and 283 may be formed on one surface and the other surface of the base 281, respectively.

Furthermore, the heat-dissipating tape 280 may be attached over an end of the first positive electrode non-coating portion 113a, the first separator 140, and the second separator 150 through the adhesion layer 282 formed on the one surface.

Also, the heat-dissipating tape 280 may adhere to a facing member through the adhesive layer 283 formed on the other surface. Here, for example, the heat-dissipating tape 280 may adhere to the second separator 150 through the adhesive layer 283 formed on the other surface.

At this time, specifically, for example, the heat-dissipating tape 280 may be attached to one surface of the second separator 150 while being wound through the adhesive layer 283 formed on the other surface and also may be attached over an end of the first positive electrode non-coating portion 113a, the first separator 140, and the other surface of the second separator 150 through the adhesive layer 282 formed on the one surface.

Thus, contraction of the first separator 140 and the second separator 150, which adhere to one surface of the heat-dissipating tape 280, may be suppressed through the heat-dissipating tape 280. Here, the contraction of the second separator 150 adhering to the other surface of the heat-dissipating tape 280 through the heat-dissipating tape 280 may be better suppressed. As a result, a phenomenon in which the positive electrode 110 and the negative electrode 120 are exposed according to the contraction of the separator 160 and then are in contact with each other to cause a short circuit therebetween, thereby causing ignition may be well prevented.

### Secondary battery

Hereinafter, a secondary battery according to an embodiment will be described.

Referring to FIG. 1, a secondary battery 10 according to an embodiment of the present invention comprises an electrode assembly 100 and a battery case 20. The electrode assembly 100 may be provided as an electrode assembly in which a positive electrode 110, a separator 160, and a negative electrode 120 are alternately stacked to be wound and comprise a heat-dissipating tape 180 comprising a heat-dissipating material.

The secondary battery 10 according to an embodiment of the present invention relates to a secondary battery comprising the electrode assembly according to the foregoing embodiment and the electrode assembly according to another embodiment. Thus, contents of this embodiment, which are duplicated with those according to the forgoing embodiment, will be omitted or briefly described, and also, differences therebetween will be mainly described.

A secondary battery 10 according to an embodiment of the present invention comprises an electrode assembly 100 and a battery case 20 in which the electrode assembly 100 is accommodated. Here, the secondary battery 10 according to the embodiment of the present invention may further comprise an electrolyte accommodated in the battery case 20.

The battery case 20 may have an upwardly opened accommodation part 21 in which the electrode assembly 100 is accommodated. Here, the battery case 20 may be formed in, for example, a cylindrical shape.

The secondary battery 10 according to an embodiment of the present invention may further comprise a cap 30 covering an opened accommodation part 21 of the battery case 20.

An electrode tab 170 is attached to the electrode 130 and is electrically connected to the electrode 130.

The electrode tab 170 may comprise a positive electrode tab 171 attached to the positive electrode 110 and a negative electrode tab 172 attached to the negative electrode 120.

The positive electrode tab 171 may be formed in an upward direction in which a cap 30 is disposed in FIG. 1, and the negative electrode tab 172 may be disposed in a downward direction, i.e., toward a bottom surface of an accommodation part 21 of a battery case 20. Here, the cap 30 connected to the positive electrode tab 171 may form a positive electrode terminal, and a lower portion of the battery case 20 connected to the negative electrode tab 172 may form a negative electrode terminal. Here, the cap 30 and the battery case 20 may be insulated from each other.

While the present invention has been particularly shown and described with reference to exemplary embodiments thereof, it is to be understood that the scope of the present invention is not limited to the electrode assembly and the secondary battery comprising the same according to the present invention. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

10: Secondary battery
20: Battery case
21: Accommodation part
30: Cap
100, 200: Electrode assembly
110: Positive electrode
111: Positive electrode collector
112: Positive electrode active material portion
113: Positive electrode non-coating portion
113a: First positive electrode non-coating portion
113b: Second positive electrode non-coating portion
120: Negative electrode
121: Negative electrode collector
122: Negative electrode active material portion
123: Negative electrode non-coating portion
123a: First negative electrode non-coating portion
123b: Second negative electrode non-coating portion
130: Electrode
140: First separator
150: Second separator
160: Separator
170: Electrode tab
171: Positive electrode tab
172: Negative electrode tab
180, 280: Heat-dissipating tape
181, 281: Base
182, 282, 283: Adhesive layer
C: Central axis
I: Winding central portion
O: Winding outer portion

## Claims

1. An electrode assembly, in which a positive electrode, a separator, and a negative electrode are alternately stacked to be wound,
wherein the positive electrode comprises a positive electrode active material portion that is an area, on which a positive electrode active material is stacked on a positive electrode collector, and a positive electrode non-coating portion that is an area, on which the positive electrode active material is not stacked,
the positive electrode non-coating portion comprises a first positive electrode non-coating portion disposed at a winding central portion, and
the electrode assembly further comprises a heat-dissipating tape disposed on the first positive electrode non-coating portion and comprising a heat-dissipating material.

2. The electrode assembly of claim 1, wherein the heat-dissipating tape is configured to dissipate heat generated in the winding central portion of the electrode assembly.

3. The electrode assembly of claim 2, wherein the heat-dissipating tape is disposed on a surface that is opposite to a surface of the first positive electrode non-coating portion, which faces the separator.

4. The electrode assembly of claim 1, wherein the heat-dissipating tape has a width greater than that of the positive electrode and the negative electrode.

5. The electrode assembly of claim 1, wherein the separator comprises a first separator and a second separator,
the positive electrode, the first separator, the negative electrode, and the second separator are sequentially stacked,
the negative electrode is formed to be longer than the positive electrode, each of the first separator and the second separator is formed to be longer than each of the positive electrode and the negative electrode, and the second separator is formed to be longer than the first separator, and
the heat-dissipating tape is attached over the first positive electrode non-coating portion, the first separator, and the second separator.

6. The electrode assembly of claim 5, wherein the positive electrode, the first separator, the negative electrode and the second separator are combined to be wound.

7. The electrode assembly of claim 6, wherein the heat-dissipating tape is disposed at the winding central portion of the wound electrode assembly.

8. The electrode assembly of claim 5, wherein the heat-dissipating tape comprises a base and an adhesive layer stacked on the base,
wherein the base comprises a graphite-based material.

9. The electrode assembly of claim 8, wherein, in the heat-dissipating tape, the adhesive layer is formed on one surface of the base, and
the heat-dissipating tape is attached over an end of the first positive electrode non-coating portion, the first separator, and the second separator through the adhesive layer.

10. The electrode assembly of claim 9, wherein, in the heat-dissipating tape, the adhesive layer is further formed on the other surface of the base.

11. The electrode assembly of claim 1, wherein the positive electrode non-coating portion further comprises a second positive electrode non-coating portion disposed at a central portion of the positive electrode,
the negative electrode comprises a negative electrode active material portion that is an area, on which a negative electrode active material is stacked on a negative electrode collector, and a negative electrode non-coating portion that is an area, on which the negative electrode active material is not stacked,
the negative electrode non-coating portion comprises a first negative electrode non-coating portion disposed at a winding outer portion of the negative electrode, and
the electrode assembly further comprises a positive electrode tab disposed on the second positive electrode non-coating portion and a negative electrode tab disposed on the first negative electrode non-coating portion.

12. A secondary battery comprising the electrode assembly of any one of claims 1 to 11.
